# EUROPÄISCHE PATENTANMELDUNG

(11) **EP 0 778 286 A2**
(43) Veröffentlichungstag der Anmeldung: **11.06.1997**
(21) Anmeldenummer: 96117056.0
(22) Anmeldetag: 24.10.1996
(51) Int. Cl.: C08B 37/08

(54) **Verfahren zur Herstellung von Chitosanalkylderivaten**

(30) Priorität: 05.12.1995 DE 19545325
(71) Anmelder: FRAUNHOFER-GESELLSCHAFT ZUR FÖRDERUNG DER ANGEWANDTEN FORSCHUNG E.V., 80636 München (DE)
(72) Erfinder: Loth, Fritz, Dr. Dipl.-Chem., 14513 Teltow (DE)
(74) Vertreter: Pfenning, Meinig & Partner

(57) **Zusammenfassung**

Die Erfindung betrifft ein Verfahren zur Herstellung von Chitosanalkylderivaten, bei dem zuerst Chitin alkalisch in einem wäßrig-organischen Reaktionsmedium deacetyliert wird, und dann das so erhaltene Chitosan ohne Zwischenisolierung in dem wäßrig-organischen Reaktionsmedium durch Zugabe eines Alkylierungsmittels alkyliert wird.

## Beschreibung

Die Erfindung betrifft ein Verfahren zur Herstellung von Chitosanalkylderivaten.

Derartige Verbindungen können als Hilfs- oder Werkstoffe in den verschiedensten Bereichen der Technik und des täglichen Lebens Anwendung finden oder auch als Ausgangsmaterialien für weitere Modifizierungen eingesetzt werden. Beispiele hierfür sind der Einsatz als Trenn- und Trägermaterial, z.B. in Medizin, Biotechnologie, Wasserwirtschaft und im Umweltschutz, als Verdickungsmittel oder Wirkstoffträger, z.B. in der Kosmetik bzw. Pharmazie, und als Ausgangsmaterial zur Herstellung von Folien, Fasern, Membranen, Mikrokapseln und anderen Formkörpern.

Generell lassen sich Derivate des Chitosans durch polymeranaloge Reaktionen an den Hydroxy- oder Aminogruppen des aus Glucosamin-Grundbausteinen bestehenden Chitosans herstellen. Die wesentlichsten Derivatisierungsreaktionen sind die Umsetzung mit Alkylierungs- oder Acylierungsreagenzien, wobei in Abhängigkeit von den Reaktionsbedingungen und der Natur des Agens O- und/oder N-Alkyl- bzw. Acylderivate entstehen. Für den technischen Einsatz sind aufgrund ihrer vorteilhaften und vielseitigen Eigenschaften wasserlösliche ionische und nichtionische Alkylderivate von besonderem Interesse.

Zur Herstellung von Chitosanalkylderivaten sind eine ganze Reihe von Verfahren bekannt, die im wesentlichen darauf beruhen, daß entweder Chitin oder Chitosan in Gegenwart von Alkali mit Alkylierungsmitteln umgesetzt wird. Zahlreiche Beispiele über mögliche Derivatisierungen sind u.a. zu finden in: G.A.F. Roberts, Chitin Chemistry, The MacMillan Press, London, 1992; Z.S. Karnicki, A. Wojtasz-Pajak, M.M. Brzeski, P.J. Bykowski (Eds.): Chitin World, Wirtschaftsverlag NW-Verlag für neue Wissenschaft GmbH, Bremerhaven, 1994). Als Alkylierungsmittel werden vor allem Halogenalkylverbindungen, Epoxy- oder Vinylverbindungen eingesetzt. Beim Einsatz von Chitin als Ausgangsmaterial erfolgt zunächst eine O-Alkylierung, da die Aminogruppen noch durch Acetylgruppen geschützt sind. Chitosanderivate werden erst durch Deacetylierung während oder nach der Umsetzung erhalten. Diese Arbeitsweise wird zwar zur Herstellung von Chitinderivaten praktiziert, hat jedoch für die Herstellung von Chitosanalkylderivaten kaum Bedeutung, da unter technisch üblichen Veretherungsbedingungen keine effektive Deacetylierung stattfindet und deshalb noch eine separate Deacetylierungsphase nachgeschaltet werden muß. Diese ist meist unvollständig oder sehr aufwendig, da die normalerweise gut löslichen Derivate sich kaum noch wirtschaftlich isolieren und reinigen lassen.

Als Stand der Technik sind vor allem solche Derivatisierungsverfahren zu nennen, die von getrocknetem körnigem Chitosan ausgehen, welches dann in heterogener Phase als Slurry in wäßrigem oder wäßrig-organischem Medium in Gegenwart von Alkali mit den verschiedensten Alkylierungsmitteln umgesetzt wird. Beispiele hierfür sind in den Patentschriften DE 3245784, DE 3502833, DE 3504095, DE 3602402, DE 4310088, US 4423346, US 4619995, JP 6160701, EP 585885 enthalten.

Wesentlichster Nachteil dieser Verfahren ist die relativ geringe Reaktivität des Chitosans und die damit verbundene schlechte Reagenzausbeute bzw. der zur Erzielung der gewünschten Produkteigenschaften erforderliche hohe Substitutionsgrad. Aus diesem Grunde sind verschiedene Anstrengungen unternommen worden, die eine Aktivierung des Chitosans und damit eine verbesserte Reaktivität zum Ziel hatten.

Beschriebene Aktivierungsverfahren sind z.B. das Auflösen und Wiederausfällen von Chitosan (DE 3501891), das wiederholte Einfrieren und Auftauen (EP 0193736, DE 3432227, DE 3223423), die Überführung der freien Aminogruppen in die Salzform (DE 3903797) oder gar das Auflösen und Arbeiten unter homogenen Bedingungen.

Letzteres führt zwar zu gleichmäßig substituierten hochwertigen Produkten, doch sind solche Verfahren kaum wirtschaftlich zu gestalten, da sie bei sehr niedrigen Polymerkonzentrationen arbeiten, die Hauptmenge der Alkylierungsreagenzien durch Nebenreaktionen verbraucht wird und große Mengen an organischen Lösungsmitteln zum Ausfällen und Reinigen der Produkte benötigt werden.

Ein weiterer wesentlicher Nachteil der bekannten Verfahren besteht darin, daß die Chitosanderivate während oder nach der Umsetzung in Lösung gehen oder gebracht werden und eine technisch aufwendige Isolierung und Trocknung erfordern (DE 4310088, EP 585885).

Ausgehend hiervon ist es die Aufgabe der vorliegenden Erfindung, ein einfaches, rationelles und wirtschaftliches Verfahren zur Herstellung von Chitosanalkylderivaten anzugeben.

Die Aufgabe wird durch die kennzeichnenden Merkmale des Anspruches 1 gelöst. Vorteilhafte Weiterbildungen sind in den Unteransprüchen angegeben.

Erfindungsgemäß wird somit vorgeschlagen, die Chitosanalkylderivate in einem zweistufigen Prozeß herzustellen. Es wird dabei von Chitin ausgegangen und dieses in einem ersten Reaktionsschritt durch eine alkalische Deacetylierung in einem wäßrig-organischen Reaktionsmedium zu einem aktivierten Chitosan umgesetzt. Wesentlich beim erfindungsgemäßen Verfahren ist nun, daß dieses aktivierte Chitosan ohne Zwischenisolierung in heterogener Phase, d.h. in dem wäßrigorganischen Reaktionsmedium durch Zugabe eines Alkylierungsmittels alkyliert wird. Es hat sich nämlich überraschenderweise gezeigt, daß im Prozeß der Deacetylierung eine aufgelockerte, reaktionsfähige Chitosanstruktur entsteht, die durch den Wegfall der sonst üblichen Isolierung, Reinigung und Trocknung in vollem Umfang erhalten bleibt und eine effektive und gleichmäßige Derivatisierung ermöglicht.

Wie vorstehend ausgeführt, ist das Reaktionsmedium erfindungsgemäß somit sowohl bei der Deacetylierung als auch bei der eigentlichen Alkylierung nahezu identisch.

Das Masse-Verhältnis von wäßrig-organischem Medium zu Chitin sollte dabei 4:1 nicht überschreiten. Besonders geeignet erwies sich ein Flottenverhältnis von 1:1 bis 2:1, wobei es günstig ist, wenn das Verhältnis von Wasser zu organischer Flüssigkeit 0,5:1 bis 2:1 beträgt.

Es hat sich dabei als vorteilhaft erwiesen, wenn als organisches Lösungsmittel ein partiell oder vollständig mit Wasser mischbares hydroxygruppenhaltiges organisches Lösungsmittel eingesetzt wird. Als derartige organische Lösungsmittel werden insbesondere die C1 - C4 Alkohole Methanol, Ethanol, Propanol-1, Propanol-2, Butanol-1 und Butanol-2 allein oder in Mischung verwendet.

Vorteilhaft beim erfindungsgemäßen Verfahren ist weiterhin, daß beim ersten Verfahrensschritt Chitin mit minimalen Mengen konzentrierter Alkalilauge in Gegenwart von nur geringen Mengen eines organischen Lösungsmittel deacetyliert werden kann. Zur Deacetylierung von einem Masse-Teil Chitin wird bevorzugt mit einem Gemisch von 0,3 - 2,5 Masse-Teilen Alkalihydroxyd, 0,3 - 3 Masse-Teilen Wasser und 0,5 - 5 Masse-Teilen eines partiell oder vollständig mit Wasser mischbaren organischen Lösungsmitteln gearbeitet. Es hat sich dabei als günstig erwiesen, wenn bei der Deacetylierung eine Temperatur von 50°C - 120°C und eine Reaktionszeit von 0,5 bis 60 Std. und bei der Alkylierung eine Temperatur von 30°C - 120°C und eine Reaktionszeit von 0,5 bis 24 Std. eingehalten wird. Die Reaktionszeiten und Reaktionstemperaturen richten sich dabei sowohl nach der Art des eingesetzten Agens als auch nach den angestrebten Produkteigenschaften.

Beim erfindungsgemäßen Verfahren ist besonders zu erwähnen, daß im Vergleich zu den bekannten Verfahren für den Deacetylierungs- Aktivierungsschritt deutlich geringere Mengen an Alkalilauge eingesetzt werden und für die nachfolgende Derivatisierung keine zusätzlichen Mengen an Natronlauge sowie mit Wasser mischbare organische Lösungsmittel benötigt werden. Die Menge an Alkali, vorzugsweise Natronlauge, für die Deacetylierung und die Alkylierung wird dabei so auf die Alkylierungsmittelmenge abgestimmt, daß bei der Alkylierung keine zusätzliche Alkalizugabe erforderlich ist und beim Einsatz von halogenhaltigen Alkylierungsmitteln überschüssiges Alkali nahezu verbraucht wird. Dadurch kann die Aufarbeitung der Produkte bzw. die Rückgewinnung von Nebenprodukten ökonomischer gestaltet werden, was sich auch in ökologischer Hinsicht positiv auswirkt. Bei Verwendung von Epoxy- oder Vinylverbindungen als Alkylierungsmittel hat es sich zudem als vorteilhaft erwiesen, einen Teil der Alkalilauge vor der Derivatisierung mit Essigsäure zu neutralisieren.

Durch das Arbeiten in extrem kurzer Flotte resultieren unmittelbar nach der Umsetzung körnige rieselfähige Produkte, die sich in technisch einfacher Weise handhaben, unter Verwendung geeigneter Flüssigkeiten, z.B. Methanol oder wäßriges Ethanol, auswaschen und trocknen lassen. Für die Alkylierung werden vorzugsweise Halogenalkyl-, Epoxy- oder Vinylverbindungen eingesetzt, wie sie aus der Polysaccharidchemie bekannt sind. Typische Beispiele hierfür sind Methylchlorid, Ethylchlorid, Natriumchloroacetat, Natrium-2-chlorethansulfonat, 2-Chlorethyldiethylamin, Ethylenoxid, Propilenoxid, 1,3 Epoxybutan, 1,2-Epoxyoctan, 2,3-Epoxybernsteinsäure, Glycidyltrimethylammoniumchlorid, Acrylnitril oder auch Vinylsulfonsäure. Das erfindungsgemäße Verfahren ist jedoch nicht auf die vorstehend erwähnten Verbindungen beschränkt. Alle anderen aus der Polysaccharidchemie bekannten Alkylierungsmittel können gleichfalls eingesetzt werden. Die Umsetzung kann auch mit einer oder mehreren Verbindungen gleichzeitig oder nacheinander durchgeführt werden. Die erforderlichen Mengen richten sich nach dem angestrebten Substitutionsgrad und betragen 0,5 - 5 Mol Alkylierungsmittel pro Mol Chitosan. Die Zugabe erfolgt vorteilhafterweise als möglichst konzentrierte wäßrige oder wäßrig-alkoholische Lösung, beispielsweise durch Aufsprühen auf das Rohchitosan.

Wie bereits vorstehend ausgeführt, zeichnet sich das erfindungsgemäße Verfahren dadurch aus, daß sowohl die Deacetylierung als auch die Derivatisierung praktisch im identischen Reaktionsmedium durchgeführt werden. Die Zusammensetzung der Reaktionsmischung bei der Derivatisierung ist somit mit der, der bei der Deacetylierung von Chitin eingesetzten Deacetylierungsmischung vergleichbar. Der Alkaligehalt der Deacetylierungsmischung ist jedoch im Veretherungsschritt, bedingt durch die Umsetzung mit den Acetatgruppen des Chitins, reduziert. Bei einem ursprünglichen NaOH-Einsatz von 0,3 bis 2,5 Masse-Teilen NaOH pro Masse Teile Chitin und Deacetylierungsgraden von 50 - 100 % entspricht das einem restlichen NaOH-Gehalt im Reaktionsgemisch von 0,5 bis 12 Mol NaOH pro Mol Chitosan. Entsprechend dem durch die Deacetylierung verbrauchten NaOH enthält das System bei der Alkylierung auch noch 0,5 bis 1 Mol Natriumacetat pro Mol Chitosan. Dieses ist auf molekularer Ebene homogen im Rohchitosan verteilt und trägt in wesentlichem Maße mit zur Strukturauflockerung und Verbesserung der Reaktivität bei.

Die Aufarbeitung der Chitosanderivate erfolgt in einfacher Weise durch Auswaschen mit dem für die Umsetzung verwendeten Alkohol-Wasser-Gemisch oder mit Methanol- bzw. Ethanol-Wasser-Gemischen, wobei der Wassergehalt der Waschflüssigkeit 50 Vol-% nicht überschreiten sollte. Das Auswaschen von überschüssigem Alkali wird, insbesondere bei den kationischen Derivaten, mit quaternären Ammoniumgruppen, durch eine vorhergehende Neutralisation, z.B. mit ethanolischer Salzsäure oder Essigsäure, erleichtert.

Der Vorteil des erfindungsgemäßen Verfahrens läßt sich dahingehend zusammenfassen, daß es im Vergleich zu den bekannten Derivatisierungsverfahren mit wesentlich geringeren Chemikalienmengen auskommt und das Reaktionsgemisch über den gesamten Prozeß eine rieselfähige gut handhabbare Konsistenz aufweist. Das Verfahren bleibt durchgängig heterogen, liefert jedoch bei guten Reagenzausbeuten qualitativ hochwertige Produkte. Diese sind bei entsprechenden Substitutionsgraden vor allem durch eine gute Wasserlöslichkeit gekennzeichnet.

Bei sehr niedrigen Substitutionsgraden oder bei Einsatz bzw. Zusatz bifunktioneller Alkylierungsmittel, z.B. Epichlorhydrin, Diepoxybutan, Divinylsulfon oder Dichloressigsäure, entstehen hochquellende, wasserunlösliche Produkte. Die Eigenschaften und damit die Anwendungsmöglichkeiten der Chitosanderivate werden im wesentlichen nicht durch das Verfahren, sondern von der Art der funktionellen Gruppe und dem Substitutionsgrad bestimmt.

Für die Herstellung des aktivierten Chitosans sowie die Herstellung verschiedener Chitosanderivate werden nachfolgend beispielhafte Ausführungen beschrieben:

### Beispiel 1

2,0 kg vorzerkleinertes Chitin (ca. 10 Mol) mit einer mittleren Teilchengröße von ca. 0,25 mm werden in einem für das Arbeiten unter Druck und Vakuum ausgelegten 50-l-Edelstahlreaktor mit Pflugscharmischwerkzeug und einem hochtourig laufenden Messerkopf vorgelegt, evakuiert, mit Stickstoff begast und erneut evakuiert. Dann werden 2,0 kg Propanol-2 in den Reaktor gesaugt, und es wird 10 min bei Raumtemperatur gemischt. Unter Zuschaltung des Messerkopfmischers werden 2,0 kg 50 masse-%ige Natronlauge (25 Mol NaOH) auf das alkoholfeuchte Chitin gesprüht. Nach weiteren 10 min intensiven Mischens wird der Messerkopf abgeschaltet und der Reaktor innerhalb von 30 min auf 100°C Produkttemperatur aufgeheizt, wobei sich ein geringer Überdruck im Reaktor aufbaut. Nach einer Reaktionszeit von 2 Stunden wird das Reaktionsgut auf 30°C abgekühlt. Unter weiterem Mischen werden 1,74 kg Propylenoxid (30 Mol) in den Reaktor gedrückt, und es wird 5 h auf 80°C erhitzt. Danach wird die Hauptmenge des Propanol-2 abdestilliert und das rieselfähige Reaktionsprodukt nach dem Abkühlen auf ca. 30°C ausgetragen. Anschließend wird das Produkt mit 80 %igem wäßrigem Ethanol gewaschen und bei 60°C im Umlufttrockenschrank getrocknet.

Der mittels NMR-Spektroskopie abgeschätzte Restacetatgruppengehalt beträgt 90 % und der molare Substitutionsgrad an Hydroxypropylgruppen 1,5. Das Produkt löst sich vollständig in Wasser.

### Beispiel 2

Analog Beispiel 1 werden 6 kg eines aktivierten alkali- und lösungsmittelfeuchtem Chitosans hergestellt. 600 g (1 Mol Chitin, 2,5 Mol NaOH) von diesem Material werden in einen 5-l-Druckreaktor mit Pflugscharmischwerkzeug überführt, evakuiert, mit Stickstoff gespült und mit 232 g (4 Mol) Propylenoxid versetzt. Dann wird 5 h auf 80°C erhitzt. Nach Beendigung der Reaktion wird das Produkt auf ca. 30°C abgekühlt, ausgetragen, mit 80 %igem wäßrigem Ethanol gewaschen und bei 60°C im Umlufttrockenschrank getrocknet.

Der molare Substitutionsgrad an Hydroxypropylgruppen beträgt etwa 1,9. Das Produkt löst sich klar und vollständig in Wasser.

### Beispiel 3

600 g des in Beispiel 2 hergestellten aktivierten Chitosans (1 Mol) werden wie in Beispiel 2 umgesetzt, wobei anstelle von Propylenoxid 324 g einer ca. 70 %igen wäßrigen Lösung von Glycidyltrimethylammoniumchlorid (1,5 Mol) zugesetzt werden. Nach Beendigung der Reaktion wird das Produkt auf ca. 30°C abgekühlt, ausgetragen, mit ethanolischer Salzsäure angesäuert, mit 80 %igem wäßrigem Ethanol gewaschen und bei 60°C im Umlufttrockenschrank getrocknet.

Das Produkt löst sich klar und vollständig in Wasser und besitzt einen Substitutionsgrad an quaternären Ammoniumgruppen von 0,9.

### Beispiel 4

600 g des in Beispiel 2 hergestellten aktivierten Chitosans (1 Mol) werden wie in Beispiel 2 umgesetzt, wobei anstelle von Propylenoxid 350 g einer 50 %igen wäßrigen Lösung von Natrium-Monochloroacetat (1,5 Mol) zugesetzt werden. Die Aufarbeitung erfolgt wie in Beispiel 2 beschrieben.

Das Produkt löst sich klar und vollständig in Wasser und besitzt einen Substitutionsgrad an Carboxymethylgruppen von 0,8.

### Beispiel 5

600 g des in Beispiel 2 hergestellten aktivierten Chitosans (1 Mol) werden wie in Beispiel 2 umgesetzt, wobei anstelle von Propylenoxid 500 g Natrium-Chlorethansulfonat (1,5 Mol) zugesetzt werden. Die Aufarbeitung erfolgt wie in Beispiel 2 beschrieben.

Das Produkt löst sich klar und vollständig in Wasser und hat einen aus dem S-Gehalt errechneten Substitutionsgrad an Sulfoethylgruppen von 0,75.

### Beispiel 6

600 g des in Beispiel 2 hergestellten aktivierten Chitosans (1 Mol) werden wie in Beispiel 2 umgesetzt, wobei anstelle von Propylenoxid 390 g einer 50 %igen wäßrigen Lösung von Natrium-Vinylsulfonat (1,5 Mol) zugesetzt werden. Die Aufarbeitung erfolgt wie in Beispiel 2 beschrieben.

Das Produkt löst sich klar und vollständig in Wasser und hat einen aus dem S-Gehalt errechneten Substitutionsgrad an Sulfoethylgruppen von 0,8.

### Beispiel 7

20 g Chitin (0,1 Mol) werden in einem Kneter mit 20 g Propanol-2 10 min bei Raumtemperatur vermischt. Anschließend werden unter ständigem Mischen 40 g 50 masse-%ige Natronlauge (0,5 Mol) zugetropft. Dann wird der Kneter verschlossen, evakuiert, mit Stickstoff gespült, und es wird weitere 30 min gemischt. Das Reaktionsgut wird dann 48h auf 65°C erhitzt. Anschließend werden 14,2 g (0,15 Mol) Monochloroessigsäure gelöst in 14,2 g Wasser zugetropft und 5 h auf 60°C erhitzt. Danach wird das Rohprodukt in 80 %igem wäßrigem Ethanol suspendiert, mit ethanolischer HCl neutralisiert, auf einer Fritte mit wäßrigem Ethanol chloridfrei gewaschen und im Umlufttrockenschrank bei 60°C getrocknet.

Es wird ein helles, rieselfähiges Produkt erhalten, das sich vollständig in Wasser auflösen läßt. Der mittels 13C-NMR-Spektroskopie bestimmte Deacetelyrungsgrad beträgt ca. 90 % und der Substitutionsgrad an Carboxymethylgruppen 0,7.

### Beispiel 8

20 g Chitin (0,1 Mol) werden in einem Kneter mit 20 g Butanol-2 10 min bei Raumtemperatur vermischt. Anschließend werden unter ständigem Mischen 20 g 50 masse-%ige Natronlauge (0,25 Mol) zugetropft. Dann wird der Kneter verschlossen, evakuiert, mit Stickstoff gespült, und es wird weitere 30 min gemischt. Das Reaktionsgut wird dann 48 h auf 65°C erhitzt. Anschließend werden 32,3 g einer ca. 70 %igen wäßrigen Lösung von Glycidyltrimethylammoniumchlorid (0,15 Mol) zugetropft und 5 h auf 60°C erhitzt. Danach wird das Rohprodukt in 80 %igem wäßrigem Ethanol suspendiert, mit ethanolischer HCl bis zur bleibenden deutlich sauren Reaktion angesäuert, auf einer Fritte mit wäßrigem Ethanol gewaschen und im Umlufttrockenschrank bei 60°C getrocknet.

Es wird ein helles rieselfähiges Produkt erhalten, das sich vollständig in Wasser auflösen läßt. Der mittels NMR-Spektroskopie bestimmte Deacetylierungsgrad beträgt ca. 90 % und der Substitutionsgrad an quaternären Ammoniumgruppen 0,7.

## Patentansprüche

1. Verfahren zur Herstellung von Chitosanalkylderivaten bei dem
a) Chitin alkalisch in einem wäßrig-organischen Reaktionsmedium deacetyliert wird,
b) das so erhaltene Chitosan ohne Zwischenisolierung in dem wäßrig-organischen Reaktionsmedium durch Zugabe eines Alkylierungsmittels alkyliert wird.

2. Verfahren nach Anspruch 1,
dadurch gekennzeichnet, daß die Deacetylierung (Verfahrensschritt a)) und die Alkylierung (Verfahrensschritt b)) im gleichen heterogenen Reaktionsmedium durchgeführt werden, wobei das Masse-Verhältnis von wäßrig-organischem Reaktionsmedium zu Chitin/Chitosan bis zur Beendigung der Reaktion 4:1 nicht überschreiten soll.

3. Verfahren nach Anspruch 2,
dadurch gekennzeichnet, daß das Masse-Verhältnis von wäßrig-organischem Reaktionsmedium zu Chitin/Chitosan im Bereich von 1:1 bis 2:1 liegt.

4. Verfahren nach mindestens einem der Ansprüche 1 bis 3,
dadurch gekennzeichnet, daß die Deacetylierung (Verfahrensschritt a)) von einem Masse-Teil Chitin mit einem Gemisch aus 0,3 bis 2,5 Masse-Teilen Alkalihydroxid, 0,3 bis 3 Masseteile Wasser und 0,5 bis 5 Masse-Teile eines oder mehrerer partiell oder vollständig mit Wasser mischbaren organischen Lösungsmitteln durchgeführt wird.

5. Verfahren nach Anspruch 4,
dadurch gekennzeichnet, daß ein Verhältnis von Wasser zu partiell oder vollständig mit Wasser mischbarem Lösungsmittel von 0,5:1 bis 2:1 eingehalten wird.

6. Verfahren nach mindestens einem der Ansprüche 1 bis 4,
dadurch gekennzeichnet, daß beim Verfahrensschritt a) Temperaturen von 50°C bis 120°C und Reaktionszeiten von 0,5 bis 60 Stunden und beim Verfahrenschritt b) Temperaturen von 30°C bis 120°C und Reaktionszeiten von 0,5 bis 24 Stunden eingehalten werden.

7. Verfahren nach mindestens einem der Ansprüche 1 bis 6,
dadurch gekennzeichnet, daß als partiell oder vollständig mit Wasser mischbares Lösungsmittel ein Hydroxygruppen enthaltendes organisches Lösungsmittel eingesetzt wird.

8. Verfahren nach Anspruch 7,
dadurch gekennzeichnet, daß das Lösungsmittel ausgewählt ist aus der Gruppe der C1-C4 Alkohole, wie Methanol, Ethanol, Propanol-1, Propanol-2, Butanol-1 oder Butanol-2.

9. Verfahren nach mindestens einem der Ansprüche 1 bis 8,
dadurch gekennzeichnet, daß das Lösungsmittel während der Reaktion und/oder nach Beendigung der Reaktion destillativ abgetrennt wird.

10. Verfahren nach mindestens einem der Ansprüche 1 bis 9,
dadurch gekennzeichnet, daß als Alkalihydroxid Natriumhydroxid eingesetzt wird.

11. Verfahren nach mindestens einem der Ansprüche 1 bis 10,
dadurch gekennzeichnet, daß als Alkylierungsmittel Halogenalkyl-, Epoxy- oder Vinylverbindungen, insbesondere Methylchlorid, Ethylchlorid, Natriumchloroacetat, Natrium-2-chlorethansulfonat, 2-Chlorethyldiethylamin, Ethylenoxid, Propylenoxid, 1,2-Epoxybutan, 1,2-Epoxyoctan, 2,3-Epoxybernsteinsäure, Glycidyltrimethylammoniumchlorid, Acrylnitril oder Vinylsulfonsäure eingesetzt werden.

12. Verfahren nach mindestens einem der Ansprüche 1 bis 11,
dadurch gekennzeichnet, daß die Reaktionsprodukte mit dem für die Aktivierung und Alkylierung verwendeten partiell oder vollständig mit Wasser mischbaren hydroxygruppenhaltigen organischen Lösungsmittel oder Lösungsmittelgemisch ausgewaschen werden.
